# EUROPÄISCHE PATENTSCHRIFT

(11) **EP 3 983 693 B1**
(45) Veröffentlichungstag und Bekanntmachung des Hinweises auf die Patenterteilung: **09.10.2024**
(21) Anmeldenummer: 20732820.4
(22) Anmeldetag: 10.06.2020
(51) Int. Cl.: F16D 11/14, F16D 23/12, F16H 25/20

(54) **LINEARANTRIEB MIT KUPPLUNG**
LINEAR DRIVE WITH CLUTCH
ENTRAÎNEMENT LINÉAIRE POURVU D'UN EMBRAYAGE

(30) Priorität: 14.06.2019 DE 202019103359 U
(43) Veröffentlichungstag der Anmeldung: 20.04.2022
(73) Patentinhaber: DewertOkin KFT, 6000 Kecskemét (HU)
(72) Erfinder: BARTUS, Péter, 6066 Tiszaalpár (HU)
(74) Vertreter: Lippert Stachow Patentanwälte Rechtsanwälte
(86) Internationale Anmeldenummer: PCT/EP2020/066093
(87) Internationale Veröffentlichungsnummer: WO 2020/249617

(56) Entgegenhaltungen:
- WO-A1-2019/091997
- WO-A1-2019/091997
- US-A1- 2014 312 724
- US-A1- 2014 312 724

## Beschreibung

Im Allgemeinen betrifft die Erfindung einen Linearantrieb gemäß dem Oberbegriff von Anspruch 1, insbesondere zum Verstellen eines Möbelstücks, Krankenbetts oder dergleichen, mit einem Elektromotor, welcher über ein Getriebe ein Hubrohr relativbeweglich zu einem stationären Führungsrohr verstellt und somit die Länge des Linearantriebs verlängert und unverkürzt, um z.B. das Möbelstück, Krankenbett oder dergleichen zu verstellen.

Im speziellen betrifft die Erfindung einen Linearantrieb mit einem über einen Elektromotor antreibbares Getriebe, einem mit dem Getriebegehäuse verbundenen und insbesondere in einem Motorgehäuse aufgenommenen Elektromotor, der eine Welle mit einer Schnecke antreibt oder am Ende mit einer Schnecke versehen ist, die ihrerseits ein Schneckenrad kämmt. Dieses Schneckenrad ist über eine Kupplung drehfest mit einem Spindelhalter verbindbar und von diesem lösbar. In dem Spindelhalter ist eine Spindel drehfest aufgenommen. Auf der Spindel läuft eine Spindelmutter, die in einem Führungsrohr längsverschieblich zwischen einer eingefahrenen hinteren Endlage und einer ausgefahrenen vorderen Endlage verstellbar ist und mit einem Hubrohr verbunden ist. Dieses Hubrohr ist wie auch das Getriebegehäuse vorzugsweise mit einem Möbel oder einem anderen Gegenstand verbunden und kann so durch die Verstellung bzw. Längsverstellung des beweglichen Hubrohrs im Verhältnis zu dem stationären Führungsrohr verstellt werden, um zwei Bauteile gegeneinander zu Verschwenken. Besonders bevorzugt wird ein solcher Linearantrieb zum Verstellen von Krankenbetten eingesetzt, wobei der Linearantrieb unterhalb eines Rahmens eines Bettes oder an dem Rahmen eines Bettes befestigt ist, insbesondere mit einer Klauenkupplung am hinteren Ende des Getriebegehäuses und das Hubrohr an einem Kopf- oder Fußteil angelenkt ist, die gegenüber dem stationären Rahmen aus einer abgelegten Position in eine verschränkte Position verstellbar sind.

In Ruhestellung ist die Kupplung eingekuppelt, wird also von einer Feder in der eingekuppelten Stellung gehalten, in welcher die Kupplung das Schneckenrad mit dem Spindelhalter verbindet und somit das Drehmoment von dem Schneckenrad auf den Spindelhalter und somit auf die Spindel überträgt. Üblicherweise erfolgt die Verbindung über paarweise komplementär an dem Schneckenrad und dem Spindelhalter ausgebildete Profilstrukturen, insbesondere in Form von Keilwellenstrukturen mit einer komplementär ausgebildeten Profilstruktur an der Innenseite der Kupplung, welche also das Schneckenrad und den Spindelhalter somit drehfest miteinander verbindet.

Für derartige Linearantriebe ist es mitunter erforderlich, dass diese aus der eingekuppelten Stellung gelöst werden müssen, mitunter auch relativ kurzfristig und schnell, z.B., weil ein Patient rasch in einem Notfall behandelt werden muss und hierzu das Kopf- oder das Fußende des Bettes abgesenkt werden muss. Hierfür dient die erfindungsgemäße Kupplung, die insofern auch als Notkupplung bezeichnet werden kann. Durch Betätigung einer Kupplungsbetätigung, welche die Kupplung gegen die Federkraft auskuppelt, wird die drehfeste Verbindung zwischen Spindelmutter und Spindelhalter unterbrochen, so dass ein Freilauf realisiert wird und das Bett bzw. das angeschwenkte Fuß- oder Kopfteil augenblicklich abgesenkt werden kann.

### Stand der Technik

Eine derartige Kupplung ist beispielsweise aus der internationalen Patentanmeldung WO 2014/005913 der Anmelderin bekannt. Bei dieser Ausgestaltung umfasst das Schneckenrad angespritzte Klauen zur Bildung eines Formteils und ist innen glattflächig. Das Schneckenrad weist eine seitlich daran angeformte Keilwelle auf und an dem Spindelhalter ist ein Flansch mit einer korrespondierend ausgebildeten Keilstruktur ausgebildet. Die Kupplung ist federgespannt und wird in der Ruhestellung von der Keilwelle an dem Schneckenrad auf die korrespondierend ausgebildete Keilstruktur an dem Spindelhalter gedrückt, so dass diese drehfest verbunden sind.

Die Kupplung wird betätigt über einen an dem Getriebegehäuse angeordneten Drehknopf, der über einen Exzenter einen Mitnehmer verstellt. Dieser Mitnehmer greift mittels Zapfen in eine außenseitig umlaufende Nut der Kupplung ein. Durch Drehung des Knopfes wird mittels des Exzenters die Kupplung aus der eingekuppelten Ruhestellung in die ausgekuppelte Freilaufstellung überführt. Im Ruhezustand verbindet die Kupplung das Schneckenrad mit dem Spindelhalter drehfest, ist also eingekuppelt.

Ferner ist der WO 2019/091997 A1 ein gattungsgemäßer Linearantrieb zu entnehmen, wobei die Kupplungsbetätigung ein an die Kupplung anliegendes Schiebeelement umfasst, das drehfest aber axial verschieblich im Verhältnis zur Kupplung angeordnet ist. Die Kupplungsbetätigung erfolgt mittels einer sich parallel zu der Welle erstreckenden Zugstange.

Die US 2014/0312724 A1 beschreibt einen Linearantrieb, wobei die Kupplung mittels einer handbetätigt zu verdrehenden Überwurfmutter zu entkuppeln ist.

### Nachteile am Stand der Technik

Nachteilig an dieser Ausgestaltung ist die komplexe Betätigung über einen Drehmechanismus bzw. über einen Drehknopf mit Exzenter. Damit muss in die Nähe des Getriebegehäuses mit diesem Drehknopf gegriffen werden um das Notlösen der Kupplung im Notfall zu realisieren. Dieses kann mitunter wegen des Zugangs problematisch sein, insbesondere in eiligen Situationen, also im Notfall.

Ferner ist der Betätigungsmechanismus im Wesentlichen seitlich neben dem Getriebegehäuse angeordnet, was den Aufbau und die Montage relativ komplex gestaltet.

### Aufgabe

Ausgehend von dem eingangs genannten Stand der Technik und den damit verbundenen Nachteilen liegt der Erfindung somit die Aufgabe zugrunde, diese Nachteile zumindest teilweise zu vermeiden und insbesondere einen Linearantrieb vorzusehen, der eine besonders einfache und schnelle Bedienung der Kupplung ermöglicht, und zwar auch von verschiedenen Bereichen des Bettes her, und welcher sehr kompakt ausgebildet ist.

### Erfindung

Erfindungsgemäß wird diese Aufgabe bereits durch die Merkmale des unabhängigen Anspruchs 1 gelöst. Vorteilhafte, aber nicht zwingende Weiterentwicklungen sind in den Unteransprüchen wiedergegeben.

In der einfachsten Ausführungsform wird diese Aufgabe bzw. das technische Problem somit bereits dadurch gelöst, dass auf das Kupplungselement zwei gegeneinander um eine gemeinsame Drehachse gegeneinander verdrehbare Spannelemente aufweist, zwischen denen ein Steilgewinde bzw. Auflaufschrägen ausgebildet ist und dass ein Zugmittel vorgesehen ist, mit welchem die Spannelemente im Verhältnis zueinander um die gemeinsame Drehachse drehbar sind.

Die Drehachse erstreckt sich dabei in Längserstreckungsrichtung der Kupplung, welche üblicherweise koaxial angeordnet ist zu der Längsachse der Spindel und somit des gesamten Linearantriebs. Durch die erfindungsgemäße Ausgestaltung ist also ein seitlicher Angriff an die Kupplung nicht mehr nötig und wird vielmehr durch eine axial entlang der Längsachse der Kupplung angeordnete Kupplungsbetätigung umfassend die beiden gegeneinander verdrehbaren Spannelememente mit zwischen diesen ausgebildeten und gegeneinander anliegenden Auflaufschrägen ersetzt. Diese Kupplungsbetätigung umfasst somit die beiden gegeneinander verdrehbaren Spannelemente, wobei ein erstes in Einbaulage innenseitig angeordnet ist und an der Kupplung anliegt bzw. diese direkt betätigt. Dieses erste Spannelement ist axial verschieblich und drehfest angeordnet und wird deshalb als Schiebelement bezeichnet. Das zweite Spannelement ist außenseitig von dem Schiebelement angeordnet, also über das Schiebelement von der Kupplung beabstandet und ist um die Drehachse drehbar, aber axial fixiert angeordnet, weshalb dieses als Drehelement bezeichnet wird. Zwischen dem Schiebelement und dem Drehelement sind gegeneinander in Einbaulage anliegende Auflaufschrägen ausgebildet, die vorzugsweise komplementäre Steigungen von ca. 45 Grad aufweisen und der Axialversatz bei der Rotation sich durch die Steigungswinkel beliebig bestimmen lässt. Die Drehung des Drehelements bewirkt deshalb ein axiales Verschieben des Schiebeelements durch das gegenseitige Auflaufen der Auflaufschrägen der beiden Spannelemente gegeneinander. Somit wird das Schiebeelement axial versetzt entlang der Kupplungslängsachse, drückt innenseitig auf die Kupplung und kuppelt diese somit aus der durch eine Feder in Ruhestellung vorgespannte Kupplung für den Freilauf bzw. die Notverstellung aus, in welcher die Kupplung den Spindelhalter für die Notbetätigung freigibt.

Diese Ausgestaltung hat entscheidende Vorteile. Zum einen ist sie sehr kompakt, weil sie linear ausgerichtet einfach in das Ende des Gehäuses integriert werden kann und keine radial angreifenden Hebel, Schieber oder andere Mechanismen vorgesehen werden müssen, welche den Bauraum des Gehäuses bzw. des Linearantriebes seitlich vergrößern.

Besonders bevorzugt ist die Kupplung im hinteren Ende des Linearantriebs angeordnet.

Bevorzugt weisen die Kupplung und die Kupplungsbetätigung, also die beiden gegeneinander auflaufenden Spannelemente eine entsprechende oder ähnliche Außengeometrie auf bzw. sind geometrisch aneinander angepasst.

Besonders bevorzugt ist die Ausbildung als zylindrische, insbesondere hohlzylindrische Bauteile mit zumindest gleichem Außendurchmesser. Vorzugsweise ist dieser Außendurchmesser geometrisch angepasst an den Innendurchmesser eines Gabelkopfes.

Bevorzugt sind das Schiebeelement und das Drehelement der Kupplungsbetätigung hohlzylindrisch bzw. ringförmig ausgebildet, so dass diese insbesondere von hinten außenseitig umgreifend bzw. umschließend auf bzw. an die Kupplung aufgesetzt werden kann. Bevorzugt ist das Schiebeelement als hohlzylindrischer Schiebering ausgebildet und das Drehelement als hohlzylindrischer Drehring.

Bevorzugt umfasst das Drehelement mindestens Zugmittelhalter zum Einsetzen bzw. Befestigen eines Zugmittels, besonders bevorzugt eines Bowdenzugs, in welchen Seilkauschen von Zugseilen eingesetzt werden können.

Bei einer bevorzugten Ausführungsform umfasst der äußere Drehring außenseitig diametral gegenüberliegend zwei solche Zugmittelhalter. Besonders bevorzugt sind diese Halter an der äußeren Mantelfläche des zweiten Spannrings drehbar angelenkt und bevorzugt ausgebildet als drehbar angelenkte Seilaufnehmer. Für den planen Abschluss des Drehrings mit dem angrenzenden Fügepartner, insbesondere Gabelkopf, kann der Drehring Ausnehmungen aufweisen, deren Größe zumindest an den Befestigungsabschnitt des Zugmittelhalters angepasst ist.

Eine besonders kompakte Ausgestaltung der Erfindung ermöglicht es erstmalig die Kupplung und die Kupplungsbetätigung, zumindest teilweise in einem Gabelkopf aufgenommen anzuordnen. Hierzu weist der Gabelkopf vorzugsweise einen stutzenartig, hohlzylindrischen Aufnahmestutzen auf, welcher sich von dem mit dem eigentlichen Stirnende des Gabelkopfs mit den Gabeln weg nach vorne erstreckt und ausgebildet ist zur Aufnahme der Kupplungsbetätigung und evtl. auch zumindest Teile der Kupplung.

Zur Erhöhung der Stabilität kann dieser Gabelkopf einer bevorzugten Ausführungsform auch teilweise in dem Getriebegehäuse aufgenommen werden bzw. in diesem verbaut sein.

Bei der bevorzugten Ausführungsform umfasst der Aufnahmestutzen des Gabelkopfes mindestens eine Zuführungsöffnung zum Zuführen eines Seils bzw. Bowdenzugs auf. Bevorzugt ist diese Zuführungsöffnung am Ende eines tangential seitlich von der äußeren Mantelfläche des Gabelkopfes abgehenden Eingangsstutzens ausgebildet, welcher sich somit quer zur Längsachse des Gabelkopfs tangential an der äußeren zylindrischen Mantelfläche des hohlzylindrischen Aufnahmestutzens für die Aufnahme der Kupplungsbetätigung erstreckt und in welchen ein Bowdenzughalter bzw. eine Befestigung für den Bowdenzug an dem Drehring aufgenommen ist. Bei der bevorzugten Ausführungsform weist der Bowdenzughalter aus dem Eingangsstutzen herausragende Aufnehmer auf, in welche eine Seilkausche am Ende eines Bowdenzugs einsteckbar ist.

Bei der besonders bevorzugten Ausführungsform weist der Gabelkopf zwei diametral gegenüberliegende Eingangsstutzen zur Aufnahme von Bowdenzughaltern auf, welche diametral gegenüberliegend tangential seitlich von der Mantelfläche des vorzugsweise zylindrischen Gabelkopfes abstehen. Somit kann die Notlösung der Kupplung z.B. von beiden Seiten eines Krankenbettes mittels eines getrennten Zugmittels betätigt werden.

Der vorgeschlagene Linearantrieb wird bevorzugt als Möbelantrieb eingesetzt, besonders bevorzugt zum Verstellen eines schwenkbaren Kopf- oder Fußteils eines Krankenbettes. Für den Fachmann ist verständlich, dass dieser allgemein zum Verstellen von mechanischen Einrichtungen aller Art einsetzbar ist, insbesondere zum Verstellen eines beweglichen Bauteils im Verhältnis zu einem stationären Bauteil.

Eine besonders kompakte Lagerung des Spindelhalters auf engem Bauraum kann dadurch realisiert werden, dass der Spindelhalter einen Lagersitz aufweist, auf dem ein Innenring eines Lagers sitzt, und einen Außenring dieses Lagers in einem Lagersitz eines Lagerhalters angeordnet ist, der das Lager in dem Gabelkopf oder auch in dem Getriebegehäuse lagert.

Der Lagerhalter weist also an einer dem Lager zugewandten Vorderseite einen Lagersitz zur einfassenden Aufnahme des Außenrings des Lagers auf und weist an einem von dem Lager abgewandten hinteren Ende einen Verbindungsbereich zur Befestigung mit dem aufnehmenden Fügepartner auf, bevorzugt die Innenseite eines Gabelkopfes, wobei dieser Verbindungsbereich gegenüber dem Lagersitz reduzierte Abmessungen aufweisen kann, um diesen einfach montieren zu können. Bei der besonders bevorzugten Ausführungsform sind zwischen dem Fügepartner und dem Lagerhalter Stifte und Rippen ausgebildet, die in Einbaulage so ineinander eingreifen, dass die genaue Drehwinkelausrichtung des Lagerhalters entlang der Längsachse der Kupplungsanordnung irrelevant ist, also in jeder Ausrichtungsposition einfach montiert werden kann.

Vorzugsweise umfasst dieser Lagersitz des Lagerhalters einen axial auf das Lager wirkenden Axialanschlag, um somit als Festlager fungieren zu können.

Bevorzugt weist der Lagersitz des Lagerhalters einen Lagerabsatz auf, der ausgebildet ist, den Außenring des Lagers sowohl außenseitig als auch stirnseitig aufzunehmen bzw. abzustützen.

Der Lagersitz des Lagerhalters kann als umfänglich geschlossenes Gebilde, z.B. als topfförmiges Gebilde ausgebildet sein, welches an einem in Einbaulage vorderen Ende den Lagerabsatz zur Aufnahme des Außenrings des Lagers aufweist.

Zur Bauraumoptimierung kann jedoch auch vorgesehen sein, dass der Lagersitz nicht als umfänglich geschlossenes Gebilde ausgebildet ist, sondern vielmehr in Umfangsrichtung voneinander beabstandete Lagerfinger aufweist, welche zwischen sich Zwischenräume ausbilden. Diese Lagerfinger können in komplementär ausgebildete Lagerfingerausnehmungen an dem hinteren Ende des Schiebelements der Kupplungsbetätigung eingreifen bzw. in diesen sitzen.

Bei der bevorzugten Ausführungsform umfasst der Lagerhalter damit einen Lagersitz für den Außenring des Lagers, der vorzugsweise den Absatz umfasst, der den Außenring in Einbaulage sowohl außenseitig also auch stirnseitig einfasst zur Realisierung einer Fest-/Loslagerung. An diesen Lagersitz des Lagerhalters schließt sich bevorzugt ein Verbindungsbereich an, mit welchem der Lagerhalter mit dem aufnehmenden Fügepartner verbunden ist, z.B. Gabelkopf.

Der Lagerhalter kann besonders einfach in nahezu jeder beliebigen Drehwinkelausrichtung in einem Aufnahmestutzen des Gabelkopfs eingesetzt werden, wenn der Verbindungsbereich des Lagerhalters mehrere sich quer zur Längsachse des Lagerhalters erstreckende Querstreben mit zwischen diesen ausgebildete Zwischenräume umfasst, in welche Stifte an der Innenseite des Stirnendes des Gabelkopfes eingreifen.

Durch die erfindungsgemäße Ausgestaltung des Lagerhalters ist es somit möglich, dass der Lagerhalter den Bereich hinter dem Ende des Spindelhalters und der hinteren Wand des Gabelkopfes überbrückt und den Lagerhalter an der hinteren Wand bzw. Rückwand des Gabelkopfes fixiert bzw. in diesem gelagert ist.

Der Lagersitz kann als umfänglich geschlossener Ring mit einem an der Stirnseite ausgebildeten Außenabsatz zur Bildung des Axialanschlags ausgebildet sein.

Eine besonders kompakte Integration des Lagerhalters in die Kupplungsbetätigung ist dadurch realisierbar, dass der Lagerhalter nicht als umfänglich geschlossenes Gebilde ausgestaltet ist, sondern der Ring des Lagersitzes mit dem Außenabsatz umfänglich mehrfach unterbrochen ist zur Bildung mehreren umfänglich voneinander beabstandeter Lagerfinger, welche zusammen den Lagersitz zur Aufnahme des Außenrings des Lagers, insbesondere des Kugellagers bilden.

Diese Lagerfinger können nun in korrespondierende Lagerfingerausnehmungen an der einer dem Drehelement zugewandten Außenseite des Schiebelements eingreifen, so dass das Schiebeelement der Kupplungsbetätigung also um diese Lagerfinger herum verschoben werden kann.

Bei der bevorzugten Ausführungsform umfasst der Lagerhalter sechs umfänglich beabstandete Lagerfinger, welche in komplementär an der Außenseite des Schiebelements ausgebildete, schlitzartige Lagerfingerausnehmungen eingreifen.

Demnach ist der vorgeschlagene Lagerhalter in Einbaulage von der Kupplungsbetätigung umschlossen bzw. von dieser eingefasst.

Bevorzugte Ausführungsformen umfassen die Ausbildung der Kupplung als Kupplungshülse, also als rundes bzw. hohlzylindrisches Bauteil mit einer inneren Profilstruktur, die angepasst ist an eine komplementäre Profilstruktur des Schneckenrads und des Spindelhalters, um diese in der eingekuppelten Stellung drehfest miteinander zu verbinden, also eine formschlüssige Verbindung herzustellen.

Bei der bevorzugten Ausführungsform ist an der Innenseite der Kupplung diese Profilstruktur als Keilwellenstruktur ausgebildet, die komplementär zu einer an dem Schneckenrad ausgebildeten Keilwelle und einer an einem dem Spindelhalter ausgebildeten Keilwelle ist, also eingekuppelt mit diesen zusammenwirkt und das Drehmoment von dem Schneckenrad auf den Spindelhalter überträgt. Bevorzugt weist der Spindelhalter einen über einen mittigen, sich entlang der Längsachse erstreckenden hohlzylindrischen Aufnahmeabschnitt zur drehfesten Aufnahme der Spindel radial endseitig abragenden Keilwellenflansch auf. Dieser Keilwellenflansch weist an einer dem Schneckenrad zugewandten Innenseite eine zur der Kupplung komplementäre Keilwellenstruktur auf, die insofern auch der Keilwellenstruktur des Schneckenrads entspricht.

Aus Kostengründen bestehen die wesentlichen Teile des Linearantriebs aus Kunststoff, insbesondere die Gehäuseteile, aber auch die meisten Getriebeteile. Lediglich die Spindel und die Schnecke bestehen aus Gründen der Festigkeit aus Stahl.

Die drehfeste Verbindung zwischen dem Spindelhalter und der Spindel erfolgt entweder über einen Presssitz oder über an der Stirnseite zwischen Spindel und Spindelhalter in stirnseitige Kerben der Spindel eingeschlagene Spannstifte.

Bevorzugt ist das Getriebegehäuse geteilt bzw. trennbar ausgebildet. Vorzugsweise umfasst dieses ein erstes Gehäuseteil, insbesondere ausgebildet zur Aufnahme des Elektromotors, sowie ein mit diesem ersten Gehäuseteil lösbar verbindbares zweites Gehäuseteil. Bevorzugt liegen die Gehäuseteile an einer Trennungsebene gegeneinander an. Bei einer spritzwassergeschützten Ausführungsform ist an der Füge- bzw. Trennungsebene ein umlaufender Fügeflansch mit einem daran ausgebildeten Dichtelement vorgesehen, welches vorzugsweise eine Dichtnut und einer komplementär dazu ausgebildeten Dichtlippe bzw. einem Dichtvorsprung umfasst, die in Einbaulage dichtend ineinander eingreifen und so die Fügestelle zwischen den Gehäuseteilen abdichtet.

Weitere Merkmale und Vorteile der vorliegenden Erfindung werden deutlich anhand der nachfolgenden Figurenbeschreibung bevorzugter Ausführungsbeispiele unter Bezugnahme auf die beiliegenden Abbildungen.

In dieser Hinsicht wird Richtungsterminologie wie etwa "oben", "unten", "vorne", "hinten", "vorderes", "hinteres", usw. in Bezug auf die Orientierung der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne aufzufassen. Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischen Bezugszeichen versehen, soweit dieses zweckmäßig ist. Die Darstellungen in den Figuren sind im Wesentlichen maßstäblich.

Zur Veranschaulichung von Details können jedoch bestimmte Bereiche für den Fachmann erkennbar übertrieben groß dargestellt sein. Darüber hinaus können die Zeichnungen plakativ vereinfacht sein und enthalten nicht jedes bei der praktischen Ausführung gegebenenfalls vorhandene Detail.

Sofern nicht anders angegeben, beziehen sich der unbestimmte Artikel und der bestimmte Artikel nicht nur auf ein einzelnes Bauteil, sondern sind zu verstehen als "mindestens eins". Die Terminologie umfasst die zuvor genannten Worte, Abwandlungen davon sowie ähnliche Bedeutungen. Ferner sollte verstanden werden, dass die Begriffe "etwa", "im Wesentlichen, und ähnliche Begriffe in Verbindung mit den Dimensionen und einer Eigenschaft einer Komponente der Erfindung die beschriebene Dimension und Eigenschaft nicht als strikte Grenze oder Parameter beschreiben und geringfügige Abwandlungen davon nicht ausschließen, welche funktional ähnlich sind. Zumindest umfassen Beschreibungsteile mit numerischen Parametern auch Abwandlungen dieser Parameter gemäß den mathematischen und fertigungstechnischen Prinzipien im Stand der Technik, z.B. Rundungen, Abweichungen und andere systematische Fehler, Fertigungstoleranzen etc.

Schließlich sind bei mehreren gleichen Bauteilen bzw. Elementen aus Gründen der Übersichtlichkeit nur jeweils eins mit einem Bezugszeichen versehen.

### Es zeigen:

- Figur 1: eine isometrische Frontansicht eines erfindungsgemäßen Linearantriebs;
- Figur 2: eine vergrößerte isometrische Frontansicht des hinteren Endes des Linearantriebs bei abgenommener Gehäuseabdeckung und entferntem Gabelkopf;
- Figur 3: eine isometrische Explosionsdarstellung der Anordnung umfassend Schneckenrad, Kupplung und Spindelhalter;
- Figur 4: eine vergrößerte perspektivische Draufsicht der Anordnung gemäß Figur 3 in ausgekuppelter Stellung (ausgekuppelt);
- Figur 5:: die Draufsicht der Anordnung gemäß Figur 4 eingekuppelt;
- Figur 6:: eine isometrische, vergrößerte Ansicht der erfindungsgemäßen Kupplungsbetätigung bei entferntem Gabelkopf;
- Figur 7: eine vergrößerte isometrische Draufsicht der Anordnung umfassend Schneckenrad, Kupplung, Spindelhalter sowie die Kupplungsbetätigung in eingekuppelter Stellung;
- Figur 8: eine vergrößerte isometrische Ansicht der Anordnung gemäß Figur 7 von hinten in ausgekuppelter Stellung;
- Figur 9: einen vergrößerten Längsschnitt der Anordnung umfassend Schneckenrad, Kupplung, Spindelhalter, Lager, Lagerhalter und Kupplungsbetätigung umfassend Schiebehülse und Drehhülse;
- Figur 10: einen Längsschnitt des Linearantriebs gemäß Figur 10 durch die Mitte des Führungsrohrs.

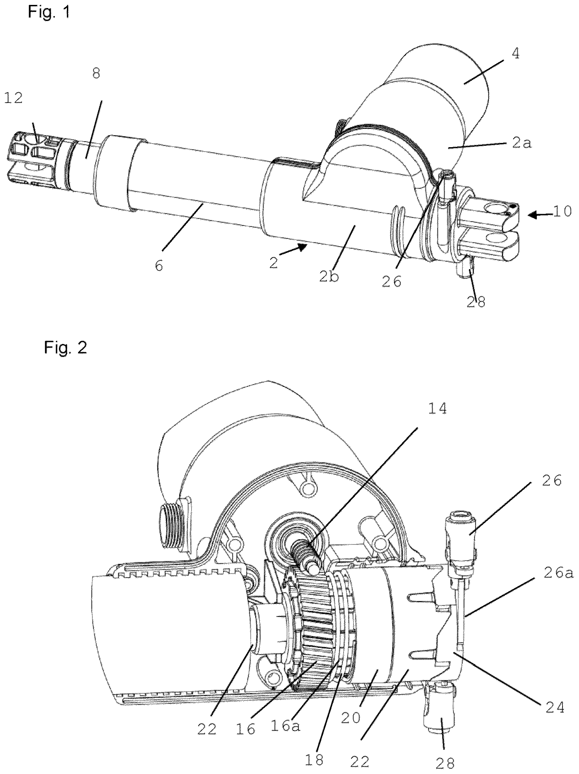

Gemäß Figur 1 besteht der Linearantrieb somit im Wesentlichen aus einem zweiteiligen Getriebegehäuse 2, einem in diesem aufgenommenen Motorgehäuse 4 mit einem darin angeordneten Elektromotor sowie einem in Längsrichtung des Linearantriebs erstreckenden Führungsrohr 6, in dem längsverschieblich ein Hubrohr 8 aufgenommen ist und zwischen einer in der Figur 1 dargestellten eingefahrenen Endposition und einer vollständig ausgefahrenen Endposition verstellbar ist.

Am vorderen Ende des Hubrohrs sowie am hinteren Ende des Gehäuses sind jeweils Gabelköpfe 10, 12 befestigt. Mit diesen Gabelköpfen 10, 12 kann der Linearantrieb zwischen zwei relativ zueinander verstellbaren Bauteilen befestigt werden, z.B. zum Verstellen des verschwenkbaren Kopf- und Fußendes eines Bettes gegenüber einem stationären Rahmen. Vorzugsweise wird dabei der hintere Gabelkopf 10 mit einer Querstrebe am Rahmen des Bettes verbunden und der vordere Gabelkopf 12 mit einer Querstrebe schwenkbar an dem Rahmen angelenkten Fuß- oder Kopfteil. Durch Ein- und Ausfahren des Hubrohrs 8 im Verhältnis zu dem stationären Führungsrohr 6 wird somit das Fuß- oder Kopfteil im Verhältnis zu dem stationären Rahmen, der eine Rahmenebene bildet, verschwenkt, also aus der Rahmenebene angehoben.

Das Getriebegehäuse 2 ist geteilt bzw. trennbar und umfasst ein hinteres Gehäuseteil 2a sowie einen mit diesem an einem Fügeflansch verbundenen Gehäusedeckel 2b, wobei an dem Fügeflansch eine Dichtungsnut ausgebildet ist.

Das hintere Gehäuseteil 2a weist einen zylindrischen Aufnahmestutzen zur Aufnahme des Motorgehäuses 4 auf, welches sich also quer zur Längserstreckungsrichtung des Linearantriebs erstreckt.

Das Motorgehäuse 4 erstreckt sich somit vorliegend quer zur Längsachse des Linearantriebs.

Wie aus der Figur 1 ersichtlich ist, weist der Gabelkopf 10 einen sich von einer Stirnwand des Gabelkopfs 10 in entgegengesetzter Richtung zu dem Gabelkopf ausgebildeten Aufnahmestutzen 10b auf, von dem sich tangential zur äußeren Mantelfläche und quer zur Längsachse dieses Aufnahmestutzens 10b, Eingangsstutzen 10d, 10e zur Aufnahme der Bowdenzughalter 26, 28 erstrecken, bzw. aus welchen die Bowdenzughalter 26, 28 herausragen, und zwar je ein Bowdenzughalter 26 nach oben und der andere Bowdenzughalter 28 in entgegengesetzter Richtung zu dem ersten nach unten.

Figur 2 zeigt eine vergrößerte perspektivische Frontansicht des in dem Getriebegehäuse 2 angeordneten Getriebes bei entferntem Gehäusedeckel 2b und Gabelkopf 10. Die von dem Elektromotor angetriebene Welle mit der darauf ausgebildeten Spindel 14, ragt quer in das Getriebegehäuse hinein und kämmt ein Schneckenrad 16, welches eine seitlich neben dem eigentlichen Schneckenrad mit den Zahnflanken einstückig angeformten Keilwellenstutzen 16a aufweist. Auf diesem Keilwellenstutzen 16a ist eine Druckfeder 18 angeordnet, welche auf eine Kupplungshülse 20 wirkt, die drehfest und längsverschieblich auf dem Keilwellenstutzen 16a sitzt und innenseitig eine zu der Keilwellenstruktur des Keilwellenstutzens 16a ausgebildete, komplementäre Keilwellenstruktur aufweist.

Die Betätigung der Kupplungshülse 20 zum Auskuppeln im Notfall, also für die Notlösung, erfolgt über die erfindungsgemäße Kupplungsbetätigung, vorliegend umfassend eine innenseitig auf die Kupplungshülse 20 wirkende und axial verschiebbar, aber drehfest angeordnete Schiebehülse 22, auf die außenseitig die drehbare, aber axial fixierte Drehhülse 24 wirkt.

Am äußeren Stirnende dieser Drehhülse 24 sind diametral gegenüberliegend die beiden Bowdenzughalter 26, 28 tangential erstreckend zum Umfang der Drehhülse drehbar angelenkt. In diese Bowdenzughalter 26, 28 können nicht dargestellte Stahlseile mit endseitigen Seilkauschen eingesetzt bzw. eingeschnappt werden.

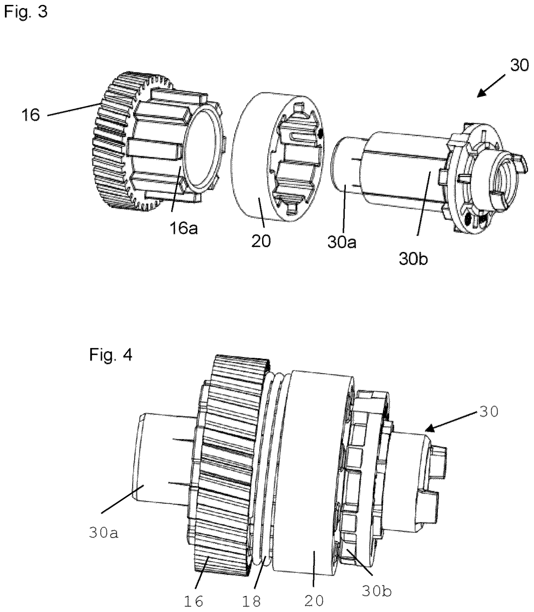

Figur 3 zeigt eine Explosionsdarstellung der Baugruppe umfassend das Schneckenrad 16 mit dem daran angeformten Keilwellenstutzen 16a und der auf diesem Keilwellenstutzen 16a sitzenden Druckfeder 18. Auf dem Keilwellenstutzen 16a ist ferner die Kupplungshülse 20 aufgeschoben, die eine an die Keilwellenstruktur des Keilwellenstutzens 16a komplementär ausgebildete innere Keilwellenstruktur aufweist.

Stirnseitig eingesteckt in das äußere, hintere Ende des Keilwellenstutzens 16a ist der hohlzylindrische Spindelhalter 30, in dem drehfest die Spindel 32 aufgenommen ist. Am hinteren, also von der Kupplungshülse 20 abgewandten Ende weist der Spindelhalter 30 einen radial von der hohlzylindrischen Mantelfläche des zentralen Spindelstutzens 30a zur drehfesten Aufnahme der Spindel 32 nach außen ragenden Keilwellenflansch 30b auf, an dessen zur Kupplungshülse 20 gerichteten Innenseite ebenfalls eine Keilwellenstruktur ausgebildet ist, die komplementär zur Wellenstruktur an dem Keilwellenstutzen 16a des Schneckenrads 16 gestaltet ist.

Figur 4 zeigt eine vergrößerte Draufsicht dieser in Figur 3 dargestellten Elemente in der ausgekuppelten Stellung, in welcher also die Kupplungshülse 20 den Keilwellenflansch 30b des Spindelhalters 34 freigibt zur Realisierung des gewünschten Freilaufs der Spindel 36.

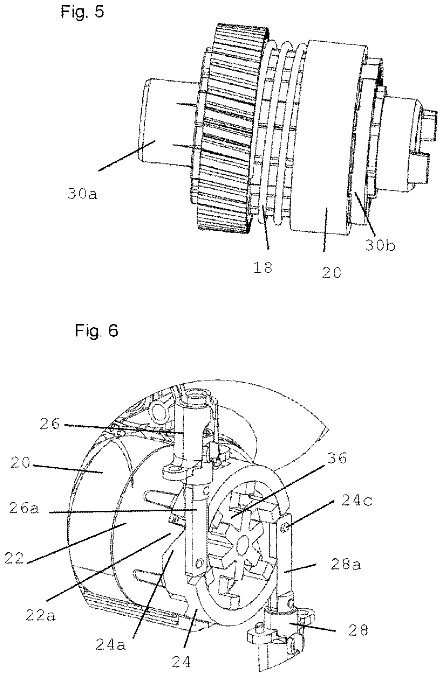

Figur 5 zeigt die Kupplungshülse 20 hingegen in der eingekuppelten Stellung, in welcher also diese Kupplungshülse 20 den Keilwellenstutzen 16a des Schneckenrads drehfest mit dem Spindelhalter 34 verbindet, also von der Druckfeder 18 auf den Keilwellenflansch 30b des Spindelhalters 30 gedrückt wird.

Die Schiebehülse 22 ist drehfest, aber in Längsrichtung der Kupplungsanordnung verschiebbar befestigt und wirkt mit der innenseitigen Stirnfläche somit auf die Kupplungshülse 20, um diese auszukuppeln. Die Schiebehülse 22 weist umfänglich äquidistant zueinander beabstandet an der äußeren Stirnfläche, welche also der Drehhülse 24 zugewandt ist, mehrere, vorliegend sechs axial abstehende Auflaufschrägen 22a auf. Die Drehhülse 24 weist an der der Schiebehülse 22 zugewandten Innenseite komplementär zu diesen Auflaufschrägen 22a der Schiebehülse ausgebildete, komplementäre Auflaufschrägen 24a der Drehhülse 24 auf, so dass die Drehhülse 24 und die Schiebehülse 22 in Einbaulage aneinander anliegend bzw. ineinander eingreifen, so dass die Stirnflächen von Schiebehülse 22 und Drehhülse 24 in Ruhestellung plan aneinander anliegen. Eine Drehung der Drehhülse 24 um die Längsachse im Uhrzeigersinn bewirkt sodann, dass die komplementär ausgebildeten Auflaufschrägen 22a, 24a gegeneinander auflaufen und somit die Axialverstellung der Schiebehülse 22 bewirken. Die Schiebehülse 22 liegt mit ihrer inneren Stirnfläche an der Stirnfläche der Kupplungshülse 20 an und ist geometrisch so ausgebildet, dass diese gleichzeitig den Keilwellenflansch 34b der Spindelhülse 34 überragt bzw. diesen innenseitig einfasst.

Gemäß Figur 6 weist die Drehhülse 24 an der hinteren, äußeren Stirnfläche diametral gegenüberliegend zwei Ausnehmungen 24b auf, in welche die flachen Arme 26a, 28a der Bowdenzughalter 26, 28 so einsetzbar sind, dass die außenseitige Fläche dieser Arme mit der äußeren Stirnfläche der Drehhülse 24 abschließen und die Drehhülse 24 somit plan mit der Stirnfläche des Gabelkopfes 10 abschließt, an dem außenseitig die Gabeln angeordnet sind. Die Arme 26a, 28a der Bowdenzughalter 26, 28 sind über Stifte 24c drehbar mit dem Stirnende der Drehhülse 24 verbunden, wie dieses besonders gut aus der vergrößerten Darstellung in Figur 6 ersichtlich ist.

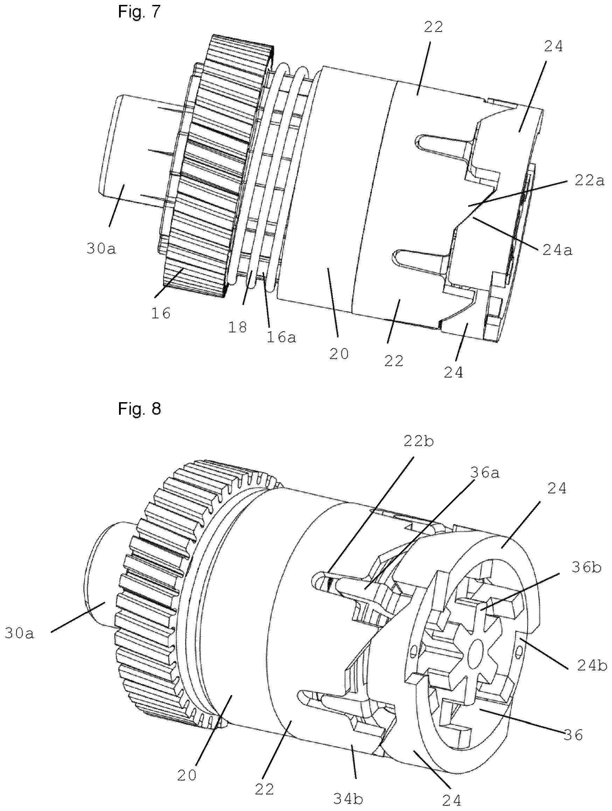

Die Figur 7 zeigt die Kupplungsbetätigung in der eingekuppelten Ruhestellung, in welcher die Schiebehülse 22 außenseitig an der Drehhülse 24 anliegt, wobei die Auflaufschräge 22a, 24a der Schiebehülse 22 und der Drehhülse 24 vollflächig so aneinander anliegen, so dass die Schiebehülse 22 und die Drehhülse 24 stirnseitig ohne Abstand aneinander anliegen.

Figur 8 zeigt die Anordnung gemäß Figur 7 hingegen in der ausgekuppelten Notstellung nach Drehung der Drehhülse 24 entgegen des Uhrzeigersinns durch einen Bowdenzughalter 26, 28, so dass die Auflaufschrägen 22a, 24a aneinander aufgelaufen sind und die Schiebehülse 22 axial nach innen an die Kupplungshülse 20 verschoben wurde.

Dabei übergreift die Schiebehülse 22 den Keilwellenflansch 30b des Spindelhalters 30 außenseitig bzw. schiebt sich über diesen drüber.

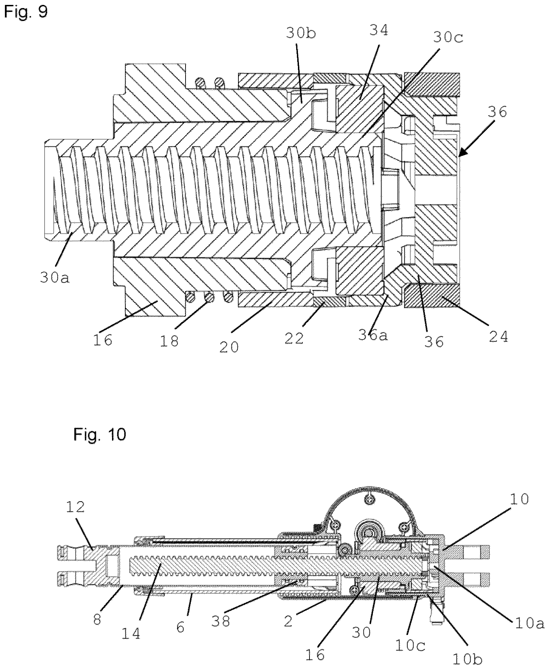

Figur 9 zeigt einen Längsschnitt der Anordnung umfassend das Schneckenrad, die auf dem Keilwellenstutzen 16a des Schneckenrads 16 angeordnete Schiebehülse 20, den in das hintere Ende des Schneckenrads 16 eingesetzten Spindelhalter 30, den auf dem hinteren Lagersitz 30c des Spindelhalters 30 aufgesetzten Rollenlager 34, welches außenseitig eingefasst ist durch den Lagersitz des Lagerhalter 36.

Die Schiebehülse 22 umfasst am hinteren, von der Kupplungshülse 20 abgewandten Ende sechs in Umfangsrichtung äquidistant voneinander beabstandete Lagerfingerausnehmungen 22b, in welchen die komplementär ausgebildeten Lagerfinger 36a des Lagerhalters eingreifen bzw. sitzen. Die äquidistant in umfänglicher Richtung voneinander beabstandeten Lagerfinger 36a bilden den umfänglichen Lagersitz, der einen Axialanschlag nach hinten und einen Radialanschlag nach außen definiert. In Einbaulage schließen die Lagerfinger 36a mit der Außenseite der Schiebehülse 22 ab bzw. sitzen in den komplementären Lagerfingerausnehmungen 22b der Schiebehülse 22.

Nach hinten schließt sich an den durch die Lagerfinger 36a gebildeten Lagersitz des Lagerhalters 36 ein Verbindungsabschnitt an, der gegenüber dem Lagersitz einen verkleinerten Außendurchmesser aufweist und vorliegend mehrere sich quer zur Längsachse des Lagerhalters erstreckende Querstreben 36a mit zwischen diesen ausgebildeten Zwischenräumen aufweist, in welche eingebaut in den Gabelkopf Vorsprünge an der Innenseite des Stirnendes des Gabelkopfes eingreifen und den Lagerhalter 36 somit fixieren.

Die Figur 10 zeigt einen vergrößerten Längsschnitt des Linearantriebs durch die Längsachse des Führungsrohrs 6 und des Hubrohrs 8. Deutlich erkennbar ist hier, dass der Gabelkopf 10 eine hintere Stirnwand umfasst, von dem sich nach außen zwei Befestigungsstege zur Aufnahme einer Stange oder dergleichen erstrecken. In entgegengesetzter Richtung umfasst dieser Gabelkopf einen einstückig angeformten und hohlzylindrischen Aufnahmestutzen 10b, welcher längenmäßig angepasst ist zur umschließenden Aufnahme der Kupplungsbetätigung und der Kupplungshülse 20. Außenseitig weist dieser Aufnahmestutzen 10b nach außen abstehende Rippen 10c auf, die in Längsrichtung des Aufnahmestutzens 10b voneinander beabstandet sind und in komplementäre ausgebildete Nuten bzw. Rillen an der Innenseite des hinteren Ende des Getriebegehäuses 2 eingreifen zur formschlüssigen Verbindung oder alternativ zum Rastverbinden des Gabelkopfes 10 mit dem hinteren Ende des Getriebegehäuses 2.

Das Getriebe treibt somit die Spindel 14 mit einem Trapezgewinde an, auf welcher eine Spindelmutter 38 läuft zwischen der in Figur 10 dargestellten, hinteren Einfahrstellung und einer ausgefahrenen Ausfahrstellung, in welcher das Hubrohr 8 mit dem vorderen Gabelkopf 12 vollständig aus dem Führungsrohr 6 ausgefahren ist.

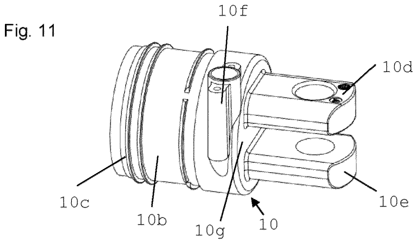

Die Figur 11 zeigt eine isometrische Seitenansicht des Gabelkopfes 10 von hinten, der ausgebildet ist zur Aufnahme der Kupplungsbetätigung. Der Gabelkopf 10 umfasst eine sich quer zur Längsachse des Gabelkopfs 10 erstreckende Stirnwand 10g, von der sich nach hinten zwei Gabeln 10d, 10e erstrecken und von der sich in entgegengesetzter Richtung zu diesen Gabeln 10d, 10e der hohlzylindrische Aufnahmestutzen 10b erstreckt, an dessen äußerer Mantelfläche beabstandet zueinander mehrere Rippen angeformt sind. Daneben ist hier auch besonders gut der Eingangsstutzen 10f erkennbar, dessen Längsachse sich quer zur Längsachse des Aufnahmestutzens 10b tangential an dessen äußerer Mantelfläche erstreckt und in welchen der Bowdenzughalter 26 einsetzbar ist, der über den Arm 26 drehbar an dem Drehring 24 der Kupplungsbetätigung angelankt ist.

### Bezugszeichenliste

- 2: Getriebegehäuse
- 2a: hinteres Getriebegehäuse
- 2b: Gehäusedeckel
- 4: Motorgehäuse
- 6: Führungsrohr
- 8: Hubrohr
- 10,12: Gabelkopf
- 10a: Vorsprung
- 10b: Aufnahmestutzen
- 10c: Rippen
- 10d,10e: Gabel
- 10f: Eingangsstutzen
- 10g: Stirnwand
- 14: Spindel
- 16: Schneckenrad
- 16a: Keilwellenstutzen
- 18: Druckfeder
- 20: Kupplungshülse
- 22: Schiebehülse
- 22a: Auflaufschräge
- 22b: Lagerfingerausnehmungen
- 24: Drehhülse
- 24a: Auflaufschräge
- 24b: Ausnehmung
- 26: Seilhalter
- 26a: Arm
- 28: Seilhalter
- 28a: Arm
- 30: Spindelhalter
- 30a: Spindelstutzen
- 30b: Keilwellenflansch
- 30c: Lagersitz
- 32: Spindel
- 34: Rollenlager
- 36: Lagerhalter
- 36a: Lagerfinger
- 36b: Querstrebe
- 38: Spindelmutter

## Patentansprüche

1. Linearantrieb mit einem Getriebegehäuse (2), einem mit dem Getriebegehäuse (2) aufgenommenen Elektromotor , der eine Welle (10) mit einer Schnecke (16) antreibt, die ihrerseits ein Schneckenrad (16) kämmt, das über eine Kupplung (20) drehfest mit einem Spindelhalter (22) verbindbar ist, mit dem eine Spindel (14) drehfest verbunden ist, auf der eine Spindelmutter läuft, die in einem Führungsrohr (6) längsverschieblich zwischen einer eingefahrenen hinteren Endlage und einer ausgefahrenen vorderen Endlage verstellbar ist und mit einem Hubrohr (8) verbunden ist, wobei die Kupplung durch eine Feder (18) vorgespannt ist und wobei die Kupplung mittels einer Kupplungsbetätigung verstellbar ist zwischen einer eingekuppelten Stellung, in welcher diese das Schneckenrad (16) drehfest mit dem Spindelhalter (30) verbindet, und einer ausgekuppelten Stellung, in welcher dieses den Spindelhalter (30) freigibt, wobei die Kupplungsbetätigung ein an die Kupplung (20) anliegendes Schiebeelement (22) umfasst, das drehfest aber axial verschieblich im Verhältnis zur Kupplung (20) angeordnet ist, **DADURCH GEKENNZEICHNET, dass** ein axial fixiertes, aber um eine Drehachse drehbares Drehelement (24) an einer von der Kupplung (20) abgewandten Außenseite an das Schiebeelement (22) angreift, dass zwischen dem Schiebeelement (22) und dem Drehelement (24) komplementär ausgebildete Auflaufschrägen (22a, 24a) ausgebildet sind, und dass ein Zugmittel vorgesehen ist, mit welchem das Drehelement (24) betätigbar ist.

2. Linearantrieb nach Anspruch 1 oder 2, **DADURCH GEKENNZEICHNET, DASS** die Kupplung als Kupplungshülse (20) ausgebildet ist.

3. Linearantrieb nach Anspruch 2, **DADURCH GEKENNZEICHNET, DASS** das Schiebeelement (22) und das Drehelement (24) ringförmig oder hülsenförmig ausgebildet sind.

4. Linearantrieb nach Anspruch 3, **DADURCH GEKENNZEICHNET, DASS** die Schiebehülse (22) drehfest, aber in Längsrichtung der Kupplungsanordnung verschiebbar befestigt ist und mit der innenseitigen Stirnfläche auf die Kupplungshülse (20) wirkt, um diese auszukuppeln, und DASS die Schiebehülse (22) umfänglich äquidistant zueinander beabstandet an der äußeren Stirnfläche, welche also der Drehhülse (24) zugewandt ist, mehrere axial abstehende Auflaufschrägen (22a) aufweist.

5. Linearantrieb nach einem der vorhergehenden Ansprüche, **DADURCH GEKENNZEICHNET, DASS** mindestens ein Bowdenzughalter (26, 28) drehbar an dem Drehelement (24) angelenkt ist.

6. Linearantrieb nach einem der Ansprüche 3 bis 5, **DADURCH GEKENNZEICHNET, DASS** das Drehelement (24) als Drehring ausgebildet ist und dass der Drehring außenseitig diametral gegenüberliegend zwei Zugmittelhalter aufweist.

7. Linearantrieb nach Anspruch 5 oder 6, **DADURCH GEKENNZEICHNET, DASS** das Drehelement (24) eine Ausnehmung (24b) für den mindestens einen Bowdenzughalter (26, 28) aufweist.

8. Linearantrieb nach einem der Ansprüche 1 bis 7, **DADURCH GEKENNZEICHNET, DASS** die Kupplungsbetätigung in einem Gabelkopf (10) angeordnet ist.

9. Linearantrieb nach Anspruch 8, **DADURCH GEKENNZEICHNET,**
(i) **DASS** der Gabelkopf (10) einen Aufnahmestutzen (10b) aufweist, der sich von einer Stirnwand des Gabelkopfes in entgegengesetzter Richtung zu an dem Gabelkopf ausgebildeten Gabeln erstreckt,
und/oder
(ii) **DASS** der Gabelkopf (10) eine Zuführungsöffnung für die Anbindung der Bowdenzughalter (26, 28) aufweist.

10. Linearantrieb nach Anspruch 8 oder 9, **DADURCH GEKENNZEICHNET, DASS** der Gabelkopf (10) zwei diametral gegenüberliegende Eingangsstutzen zur Aufnahme von Bowdenzughaltern aufweist, welche diametral gegenüberliegend tangential seitlich von der Mantelfläche des Gabelkopfes (10) abstehen.

11. Linearantrieb nach einem der vorhergehenden Ansprüche, **DADURCH GEKENNZEICHNET, DASS** der Spindelhalter (34) einen Lagersitz (30c) aufweist, auf dem ein Innenring eines Lagers (34) sitzt, dass ein Außenring des Lagers (34) in einem Lagersitz eines Lagerhalters (36) sitzt, der das Lager (34) in dem Gabelkopf (10) oder dem Getriebegehäuse (2) lagert, und dass der Lagerhalter (36) innerhalb der Kupplungsbetätigung angeordnet ist.

12. Linearantrieb nach Anspruch 11, **DADURCH GEKENNZEICHNET,**
(i) **DASS** der Lagersitz (30c) des Lagerhalters (36) einen axial auf das Lager (34) wirkenden Axialanschlag umfasst,
und/oder
(ii) **DASS** der Lagersitz (30c) des Lagerhalters (36) einen Lagerabsatz aufweist, gegen den der Außenring des Lagers radial außenseitig und axial stirnseitig anliegt,
und/oder
(iii) **DASS** der Lagersitz (30c) unterbrochen ist zur Bildung von umfänglich getrennt voneinander ausgebildeten Lagerfingern (36a).

13. Linearantrieb nach Anspruch 12, **DADURCH GEKENNZEICHNET, DASS** das Schiebeelement (22) an einer dem Drehelement (24) zugewandten Außenseite zur Aufnahme der Lagerfinger (36a) ausgebildete Lagerfingerausnehmungen (22b) aufweist, in welche die Lagerfinger (36a) eingreifen.

14. Linearantrieb nach Anspruch 13, **DADURCH GEKENNZEICHNET, DASS** der Lagerhalter (36) sechs umfänglich beabstandete Lagerfinger (36a) aufweist, welche in sechs komplementär an der Außenseite des Schiebelements (22) ausgebildete, schlitzartige Lagerfingerausnehmungen (22b) eingreifen.

15. Linearantrieb nach einem der Ansprüche 9 bis 14, **DADURCH GEKENNZEICHNET, DASS** der Lagerhalter (35) einen Verbindungsabschnitt zur Verbindung mit dem Gabelkopf (10) oder dem Getriebegehäuse (2) aufweist.

16. Linearantrieb nach Anspruch 15, **DADURCH GEKENNZEICHNET, DASS** der Verbindungsbereich des Lagerhalters (36) mehrere sich quer zur Längsachse des Lagerhalters erstreckende Querstreben (36b) mit zwischen diesen ausgebildeten Zwischenräumen umfasst, in welche Stifte oder Vorsprünge (10a) an der Innenseite des Stirnendes des Gabelkopfes (10) in Einbaulage eingreifen.

## Claims

1. A linear drive comprising a transmission housing (2), an electric motor (24) which is accommodated with the transmission housing (2) and drives a shaft (10) with a worm (16) which in turn meshes with a worm gear (18) which can be non-rotatably connected by way of a clutch (20) to a spindle holder (22) to which there is non-rotatably connected a spindle (14) on which runs a spindle nut which is adjustable in a guide tube (6) longitudinally displaceably between a retracted rear end position and an extended front end position and is connected to a lift tube (8), wherein the clutch is biased by a spring (18) and wherein the clutch is displaceable by means of a clutch actuation between a coupled position in which it non-rotatably connects the worm gear (16) to the spindle holder (30) and an uncoupled position in which it releases the spindle holder (30), wherein the clutch actuation includes a slide element (22) which bears against the clutch (20) and which is arranged non-rotatably but axially displaceably in relation to the clutch (20), **CHARACTERISED IN THAT** a rotary element (24) which is axially fixed but rotatable about an axis of rotation engages a slide element (22) at an outside facing away from the clutch (20), that run-on bevels (22a, 24a) of a complementary configuration are provided between the slide element (22) and the rotary element (24), and that there is provided a pulling means with which the rotary element (24) is actuable.

2. A linear drive as set forth in claim 1 or 2, **CHARACTERISED IN THAT** the clutch is in the form of a clutch sleeve (20).

3. A linear drive as set forth in claim 2, **CHARACTERISED IN THAT** the slide element (22) and the rotary element (24) are of a ring-shaped or sleeve-shaped configuration.

4. A linear drive as set forth in claim 3, **CHARACTERISED IN THAT** the sliding sleeve (22) is fixed non-rotatably but axially displaceably in the longitudinal direction of the clutch arrangement and acts with its inside end face on the clutch sleeve (20) to release the same, and THAT the sliding sleeve (22) has a plurality of axially projecting run-up bevels (22a) spaced equidistantly from one another circumferentially on the outer end face, which thus faces the rotating sleeve (24).

5. A linear drive as set forth in one of the preceding claims, CHARACRTERISED IN THAT at least one Bowden cable holder (26, 28) is rotatably fitted to the rotary element (24).

6. A linear driver as set forth in one of claims 3 through 5, **CHARACTERIZED IN THAT** the rotary element (24) is designed as a rotary ring and that the rotary ring externally includes two pulling means holders in diametrically opposite relationship on the outside.

7. A linear drive as set forth in claim 5 or 6, **CHARACTERISED IN THAT** the rotary element (24) has a recess (24b) for the at least one Bowden cable holder (26, 28).

8. A linear drive as set forth in one of claims 1 through 7, **CHARACTERISED IN THAT** the clutch actuation is arranged in a fork head (10).

9. A linear drive as set forth in claim 8, **CHARACTERISED IN THAT**
(i) the fork head (10) has a receiving connecting piece (10b) extending from an end wall of the fork head in the opposite direction to forks provided on the fork head
and/or
(ii) the fork head (10) has a feed opening for the connection of the Bowden cable holders (26, 28).

10. A linear drive as set forth in claim 8 or 9, **CHARACTERISED IN THAT** the fork head (10) has two diametrally oppositely disposed entry connecting pieces for receiving Bowden cable holders which project in diametrally opposite relationship tangentially laterally from the peripheral surfac of the fork head (10).

11. A linear drive as set forth in one of the preceding claims **CHARACTERISED IN THAT** the spindle holder (34) has a bearing seat (30c) on which an inner race of a bearing (34) sits, an outer race (34) of the bearing (34) sits in a bearing seat of a bearing holder (36) which mounts the bearing (34) in the fork head (10) or in the transmission housing (2) and that the bearing holder (36) is arranged within the clutch actuation.

12. A linear drive as set forth in claim 11, **CHARACTERISED IN THAT**
(i) the bearing seat (30c) of the bearing holder (36) includes an axial abutment acting on the bearing (34),
and/or
(ii) the bearing seat (30c) of the bearing holder (36) has a bearing step where the outer race of the bearing bears against radially on the outside and axially on the end face,
and/or
(iii) the bearing seat (30c) is interrupted to form bearing fingers (36a) which are spaced from each other in the peripheral direction.

13. A linear drive as set forth in claim 12, **CHARACTERISED IN THAT** the slide element (22) has bearing finger recesses (22b) which are provided at an outside facing towards the rotary element (24) for receiving the bearing fingers (36a) and into which the bearing fingers (36a) engage.

14. A linear drive as set forth in claim 13, **CHARACTERISED IN THAT** the bearing holder (36) has six peripherally spaced bearing fingers (36a) which engage into six slot-like bearing finger recesses (22b) of complementary configuration at the outside of the slide element (22).

15. A linear drive as set forth in one of claims 9 through 14, **CHARACTERISED IN THAT** the bearing holder (35) has a connecting portion for connection to the fork head (10) or the transmission housing (2).

16. A linear drive as set forth in claim 15, **CHARACTERISED IN THAT** the connecting region of the bearing holder (36) has a plurality of transverse struts (36b) which extend transversely relative to the longitudinal axis of the bearing holder, with intermediate spaces provided between them, into which pins or projections (10a) at the inside of the end of the fork head (10) engage in the installed position.

## Revendications

1. Entraînement linéaire comprenant un boîtier de transmission (2), un moteur électrique (24) qui est logé dans le boîtier de transmission (2) et qui entraîne un arbre (10) avec une vis sans fin (16) qui à son tour s'engrène avec un engrenage à vis sans fin (16) qui peut être relié de manière non rotative au moyen d'un embrayage (20) à un porte-broche (22) auquel est relié de manière non rotative une broche (14) sur laquelle tourne un écrou de broche qui est réglable dans un tube de guidage (6) de manière à pouvoir être déplacé longitudinalement entre une position finale arrière rétractée et une position finale avant déployée et qui est relié à un tube de levage (8), dans lequel l'embrayage est sollicité par un ressort (18) et dans lequel l'embrayage peut être déplacé au moyen d'un actionnement d'embrayage entre une position couplée dans laquelle il relie de manière non rotative la vis sans fin (16) au porte-broche (30) et une position découplée dans laquelle il libère le porte-broche (30), l'actionnement de l'embrayage comprenant un élément coulissant (22) qui s'appuie sur l'embrayage (20) et qui est disposé de manière non rotative mais axialement déplaçable par rapport à l'embrayage (20), **CARACTÉRISÉ EN CE qu'**un élément rotatif (24) qui est axialement fixe mais rotatif autour d'un axe de rotation engage l'élément coulissant (22) sur un côté extérieur détourné de l'embrayage (20), que des rampes (22a, 24a) de configuration complémentaire sont prévus entre l'élément coulissant (22) et l'élément rotatif (24), et qu'il est prévu un moyen de traction avec lequel l'élément rotatif (24) peut être actionné.

2. Entraînement linéaire selon la revendication 1 ou 2, **CARACTÉRISÉ EN CE que** l'embrayage se présente sous la forme d'une douille d'embrayage (20).

3. Entraînement linéaire selon la revendication 2, **CARACTÉRISÉ EN CE que** l'élément coulissant (22) et l'élément rotatif (24) ont une configuration en forme d'anneau ou de manchon.

4. Entraînement linéaire selon la revendication 3, **CARACTÉRISÉ EN CE que** le manchon coulissant (22) est fixé de manière non rotative mais déplaçable axialement dans la direction longitudinale du dispositif d'embrayage et qu'il agit avec sa face d'extrémité intérieure sur le manchon d'embrayage (20) pour le libérer, et que le manchon coulissant (22) a une pluralité de rampes (22a) faisant saillie axialement et espacées de manière équidistante les unes des autres circonférentiellement sur la face d'extrémité extérieure, qui fait ainsi face au manchon rotatif (24).

5. Entraînement linéaire selon l'une des revendications précédentes, **CARACTÉRISÉ EN CE qu'**au moins un support de câble Bowden (26, 28) est monté de manière rotative sur l'élément rotatif (24).

6. Entraînement linéaire selon l'une des revendications 3 à 5, **CARACTÉRISÉ EN CE que** l'élément rotatif (24) est conçu comme un anneau rotatif et que l'anneau rotatif comprend à l'extérieur deux supports de moyens de traction en relation diamétralement opposée sur l'extérieur.

7. Entraînement linéaire selon la revendication 5 ou 6, **CARACTÉRISÉ EN CE que** l'élément rotatif (24) comporte une cavité (24b) pour au moins un support de câble Bowden (26, 28) .

8. Entraînement linéaire selon l'une des revendications 1 à 7, **CARACTÉRISÉ EN CE que** l'actionnement de l'embrayage est disposé dans une tête de fourche (10).

9. Entraînement linéaire selon la revendication 8, **CARACTÉRISÉ EN CE que**
(i) la tête de fourche (10) a une pièce de connexion de réception (10b) s'étendant à partir d'une paroi d'extrémité de la tête de fourche dans la direction opposée aux fourches fournies sur la tête de fourche
et/ou
(ii) la tête de fourche (10) comporte une ouverture d'alimentation pour la connexion des supports de câble Bowden (26, 28).

10. Entraînement linéaire selon la revendication 8 ou 9, **CARACTÉRISÉ EN CE que** la tête de fourche (10) a deux pièces de connexion d'entrée disposées de manière diamétralement opposée pour recevoir les supports de câble Bowden qui font saillie dans une relation diamétralement opposée tangentiellement latéralement à partir de la surface périphérique de la tête de fourche (10).

11. Entraînement linéaire selon l'une des revendications précédentes, **CARACTÉRISÉ EN CE que** le porte-broche (34) possède un siège de palier (30c) sur lequel repose une bague intérieure d'un palier (34), qu'une bague extérieure du palier (34) repose dans un siège de palier d'un support de palier (36) qui monte le palier (34) dans la tête de fourche (10) ou dans le boîtier de transmission (2) et que le support de palier (36) est disposé à l'intérieur de l'actionnement de l'embrayage.

12. Entraînement linéaire tel que décrit dans la revendication 11, **CARACTÉRISÉ EN CE que**
(i) le siège de palier (30c) du support de palier (36) comprend une butée axiale agissant sur le palier (34),
et/ou
(ii) le siège de palier (30c) du support de palier (36) comporte un épaulement de palier où la bague extérieure du palier s'appuie radialement à l'extérieur et axialement sur la face d'extrémité,
et/ou
(iii) le siège de palier (30c) est interrompu pour former des doigts de palier (36a) qui sont espacés les uns des autres dans la direction périphérique.

13. Entraînement linéaire selon la revendication 12, **CARACTÉRISÉ EN CE que** l'élément coulissant (22) comporte des évidements pour les doigts d'appui (22b) qui sont prévus à la face extérieur tournée vers l'élément rotatif (24) pour recevoir les doigts d'appui (36a) et dans lesquels les doigts d'appui (36a) s'engrènent.

14. Entraînement linéaire selon la revendication 13, **CARACTÉRISÉ EN CE que** le support de palier (36) présente six doigts de palier (36a) espacés à la périphérie qui s'engagent dans six évidements de doigts de palier en forme de fente (22b) de configuration complémentaire à l'extérieur de l'élément coulissant (22).

15. Entraînement linéaire selon l'une des revendications 9 à 14, **CARACTÉRISÉ EN CE que** le support de palier (35) comporte une partie de connexion pour la connexion à la tête de fourche (10) ou au boîtier de transmission (2) .

16. Entraînement linéaire selon la revendication 15, **CARACTÉRISÉ EN CE que** la partie de connexion du support de palier (36) comporte plusieurs entretoises transversales (36b) qui s'étendent transversalement par rapport à l'axe longitudinal du support de palier, avec des espaces intermédiaires prévus entre elles, dans lesquels des goupilles ou des saillies (10a) sur la face intérieur de l'extrémité frontale de la tête de fourche (10) s'engagent dans la position installée.
